# EUROPÄISCHE PATENTSCHRIFT

(11) **EP 4 215 319 B1**
(45) Veröffentlichungstag und Bekanntmachung des Hinweises auf die Patenterteilung: **19.08.2026**
(21) Anmeldenummer: 23151702.0
(22) Anmeldetag: 16.01.2023
(51) Int. Cl.: B25J 15/02, B25J 15/04

(54) **AUTOMATISCH UND MANUELL BETÄTIGBARES WECHSELSYSTEM**
AUTOMATICALLY AND MANUALLY OPERATED CHANGE SYSTEM
SYSTÈME DE CHANGEMENT À ACTIONNEMENT AUTOMATIQUE ET MANUEL

(30) Priorität: 19.01.2022 DE 202022100264 U; 07.06.2022 DE 102022114283
(43) Veröffentlichungstag der Anmeldung: 26.07.2023
(73) Patentinhaber: SCHUNK SE & Co. KG Spanntechnik Greiftechnik Automatisierungstechnik, 74348 Lauffen am Neckar (DE)
(72) Erfinder: Gelver, Heinrich, 74336 Brackenheim (DE); Danner, Lisa, 74336 Brackenheim (DE); Schnittker, Frank Clemens, 49401 Damme (DE)
(74) Vertreter: DREISS Patentanwälte PartG mbB

(56) Entgegenhaltungen:
- EP-B1- 3 263 294
- WO-A1-2021/081388
- DE-C5- 102004 029 051
- DE-U1- 9 213 009
- JP-A- 2011 189 415

## Beschreibung

Die Erfindung betrifft ein Wechselsystem, insbesondere zum lösbaren Anordnen von Greifbacken an Handhabungseinrichtungen, mit einem maschinenseitig angeordneten Wechselkopf, mit einem am Wechselkopf befestigbaren Adapter und mit einem Magazin zur Aufnahme des Adapters. Die Greifbacke kann durch den Adapter und/oder den Wechselkopf gebildet werden. Ferner ist ein Verriegelungsmechanismus zum Verriegeln des Adapters am Wechselkopf vorgesehen. Als Handhabungseinrichtung kommen insbesondere Greifvorrichtungen, Spannvorrichtungen und dergleichen in Betracht. Derartige Wechselsystem können auch bei Bearbeitungsmaschinen Verwendung finden, wobei dann der Wechselkopf maschinenseitig angeordnet ist und am Adapter insbesondere ein Werkzeug vorgesehen sein kann.

Mit dem Wechselsystem kann folglich ein rasches und dennoch funktionssicheres Wechseln des Adapters am Wechselkopf gewährleistet werden. Der Verriegelungsmechanismus kann dabei handbetätigt oder auch automatisch maschinell betätigt sein.

Die JP 2011 189 415 A offenbart ein Wechselsystem mit einem im Wechselkopf angeordneten Verriegelungsbolzen, welcher in einer Verriegelungslage von Wechselkopf und vom Adapter eingehaust ist, und mittels eines am Wechselkopf zusätzlich vorgesehenen Stifts zum Lösen des Adapters in Freigabelage gedrängt werden kann.

Aus der DE 92 12 009 U1 ist ein Greifer mit einer Backe und Fingern bekannt, wobei die Finger mittels Montagefüßen an der Backe angeordnet sind und mittels einer Drucktaste von den Montagefüßen lösbar sind. Die DE 92 12 009 U1 offenbart weder ein Federmittel, noch einen Verriegelungsbolzen.

Die DE 10 2004 029 051 C5 offenbart eine Befestigungseinrichtung zur Befestigung einer Aufsatzbacke, wobei die Befestigungseinrichtung einen manuell bedienbaren und rotierbaren Befestigungsbolzen aufweist. Die EP 3 263 294 B1 und WO 2021/081388 A1 offenbaren Anschlussstücke für Roboterarme.

Der Erfindung liegt die Aufgabe zugrunde, ein eingangs beschriebenes Wechselsystem derart weiterzubilden, dass ein Wechseln des Adapters auf einfache Art und Weise und dennoch funktionssicher ermöglicht wird.

Diese Aufgabe wird mit einem Wechselsystem mit den Merkmalen des Anspruchs 1 gelöst. Der Wechselkopf und/oder der Adapter weist wenigstens einen Verriegelungsbolzen auf, welcher entlang einer x-Achse zwischen einer inneren Freigabelage und einer äußeren Verriegelungslage verlagerbar ist. Vorzugsweise weist der Wechselkopf und/oder der Adapter eine Bolzenaufnahme zur Aufnahme des wenigstens einen Verriegelungsbolzens auf, wobei die Bolzenaufnahme vorzugsweise durch eine parallel zur x-Achse erstreckende Sacklochbohrung ausgebildet ist. Der Wechselkopf ist in der Freigabelage von dem Adapter lösbar und in der Verriegelungslage am Adapter mittels des wenigstens einen Verriegelungsbolzens verriegelbar ausgebildet. Der Wechselkopf und/oder der Adapter weist wenigstens ein Federmittel auf, welches den wenigstens einen Verriegelungsbolzen in die Verriegelungslage drängt, sodass ohne äußeren Energieeintrag der Adapter stets mit dem Wechselkopf verbunden ist. Zum Befestigen des Adapters am Wechselkopf und zum Lösen des Adapters vom Wechselkopf ist der Adapter entlang einer senkrecht zur x-Achse verlaufenden y-Achse in das Magazin einführbar. Der Adapter befindet sich im in das Magazin eingeführten Zustand in der Magazinposition, vorzugsweise wird die Magazinposition erreicht, wenn der Adapter an einem Magazinanschlag angeordnet ist. Das Magazin weist ferner wenigstens ein sich entlang der y-Achse erstreckendes Betätigungselement auf, welches in der Magazinposition des Adapters den wenigstens einen Verriegelungsbolzen kontaktiert und entgegen der Federkraft des Federmittels aus der Verriegelungslage in die Freigabelage drängt.

Das Wechselsystem ermöglicht ein einfaches und schnelles automatisierbares Montieren und Demontieren. Durch den einfachen Aufbau des Adapters und die translatorische Verlagerung des wenigstens einen Verriegelungsbolzens zwischen der Verriegelungslage und der Freigabelage ist eine manuelle Betätigung ebenfalls einfach umsetzbar. Ferner ist es nicht erforderlich elektrische oder pneumatische Energie dem Wechselsystem zuzuführen, um den Verriegelungsbolzen zu verlagern.

Eine vorteilhafte Ausführungsform des Wechselsystems sieht vor, dass der Wechselkopf wenigstens eine Aufnahme und dass der Adapter wenigstens einen Einführabschnitt aufweist, wobei sich der Einführabschnitt entlang einer senkrecht zur x-Achse und zur y-Achse verlaufenden z-Achse erstreckt und in die Aufnahme einführbar ist. Alternativ weist der Wechselkopf den wenigstens einen Einführabschnitt und der Adapter die wenigstens eine Aufnahme auf. Vorzugsweise ist der wenigstens eine Einführabschnitt am Adapter und die wenigstens eine Aufnahme am Wechselkopf vorgesehen, wenn der wenigstens eine Verriegelungsbolzen am oder im Wechselkopf vorgesehen ist. Vorzugsweise ist der wenigstens eine Einführabschnitt am Wechselkopf und die wenigstens eine Aufnahme am Adapter vorgesehen, wenn der wenigstens eine Verriegelungsbolzen am oder im Adapter vorgesehen ist. Mittels des Einführabschnitts ist eine relative Positionierung zwischen dem Adapter und dem Wechselkopf entlang der x-Achse und der y-Achse realisierbar, sodass der Adapter exakt in das Magazin einführbar ist.

Es ist denkbar, dass der Adapter mehrteilig ausgebildet ist. Wenigstens ein erstes Adapterteil bildet im Wesentlichen die Greifbacke aus. Wenigstens ein zweites Adapterteil umfasst den wenigstens einen Einführabschnitt und/oder den wenigstens einen Verriegelungsbolzen sowie die wenigstens eine Aufnahme. Somit können auch bestehende Greifbacken, insbesondere Greiffinger, mit dem Wechselsystem verwendet werden.

Vorteilhafterweise ist der wenigstens eine Verriegelungsbolzen und/oder der wenigstens eine Einführabschnitt derart ausgebildet, dass der wenigstens eine Einführabschnitt in der Freigabelage aus dem Wechselkopf bzw. dem Adapter, insbesondere aus der wenigstens einen Aufnahme, entnehmbar und in der Verriegelungslage im Wechselkopf bzw. im Adapter, insbesondere in der wenigstens einen Aufnahme, mittels des wenigstens einen Verriegelungsbolzens verriegelbar ist.

Es ist vorteilhaft, wenn der wenigstens eine Einführabschnitt wenigstens einen ersten Einführbolzen und wenigstens einen zweiten Einführbolzen aufweist. Die Einführbolzen weisen jeweils einen Klemmabschnitt auf, welche mit dem wenigstens einen Verriegelungsbolzen zum Freigeben und Verriegeln zusammenwirken. In der Verriegelungslage ist entlang der y-Achse der wenigstens eine Verriegelungsbolzen zwischen dem wenigstens einen ersten Einführbolzen und dem wenigstens einen zweiten Einführbolzen angeordnet. Demnach können mittels eines Verriegelungsbolzen gleichzeitig wenigstens zwei Einführbolzen betätigt werden, sodass eine gleichmäßige Kraftverteilung erfolgen kann.

In einer weiteren vorteilhaften Ausführungsform weist der wenigstens eine Verriegelungsbolzen einen inneren ersten Abschnitt, einen mittleren zweiten Abschnitt und einen äußeren dritten Abschnitt auf. Der erste Abschnitt ist innen, also innerhalb des Wechselkopfs und/oder des Adapters, angeordnet und weist eine Federaufnahme in der Form eines Hohlzylinders zur Aufnahme des Federmittels auf. Das Federmittel ist im montierten Zustand zwischen dem Boden der Sacklochbohrung und der Federaufnahme angeordnet. Weder der erste Abschnitt, noch das Federmittel sind im montierten Zustand einsehbar. Ferner weist der erste Abschnitt eine Verriegelungsschräge zur Verriegelung des Einführabschnitts auf. Dabei wirken die Verriegelungsschräge des wenigstens einen Verriegelungsbolzens und der Klemmabschnitt des wenigstens einen Einführabschnitts derart zusammen, dass in der Verriegelungslage die Verriegelungsschräge den Klemmabschnitt festsetzt. Der wenigstens eine Einführabschnitt hintergreift vorzugsweise den wenigstens einen Verriegelungsbolzen in der Verriegelungslage. Der zweite Abschnitt des Verriegelungsbolzens weist eine Bolzenausnehmung zur Freigabe des Einführabschnitts auf, wobei zur Freigabe des Einführabschnitts der Verriegelungsbolzen translatorisch entlang der x-Achse verlagert wird, sodass der zweite Abschnitt des Verriegelungsbolzens im Bereich des Einführabschnitts angeordnet ist. So dann lässt sich der Einführabschnitt durch die Bolzenausnehmung hindurchführen und der Adapter kann vom Wechselkopf gelöst werden. Der dritte Abschnitt des Verriegelungsbolzens ist außen, also von außen einsehbar, angeordnet und dient zur Kraftaufnahme der durch das wenigstens eine Betätigungselement des Magazins oder einen Benutzer eingebrachten Betätigungskraft. Der dritte Abschnitt ist derart ausgebildet, dass beim Einführen des Adapters in das Magazin ein einfaches Gleiten entlang des wenigstens einen Betätigungselements möglich ist.

Vorteilhafterweise weist das wenigstens eine Betätigungselement wenigstens eine Betätigungsschräge zum gleichmäßigen Betätigen des Verriegelungsbolzens auf. Dazu schließt das Betätigungselement zum Wechselkopf und/oder zum Adapter in der Magazinposition einen Winkel ein, welcher vorzugsweise größer als 5°, insbesondere größer als 10° und vorzugsweise größer als 15° ist und/oder kleiner als 35°, insbesondere kleiner als 30° und bevorzugt kleiner als 25° ist. Die Betätigungsschräge kann vorzugsweise gegenüber der y-Achse und/oder der z-Achse vorgesehen sein, sodass der Adapter in das Magazin entlang der y-Achse und/oder entlang der z-Achse einführbar ist.

Vorteilhafterweise weist das Magazin wenigstens ein erstes Magazinblech und ferner bevorzugt ein zweites Magazinblech auf. Das erste Magazinblech ist schwimmend, insbesondere mittels Elastomer-Aufnahmebuchse, am zweiten Magazinblech gelagert. Demnach kann das erste Magazinblech nachgeben, falls der Adapter fehlerhaft in das Magazin eingeführt wird oder es in sonstiger Weise zu einer Kollision mit dem Magazin kommt.

Ferner ist es vorteilhaft, wenn das Magazin eine am ersten Magazinblech angeordnete Magazineinlage aufweist. Die Magazineinlage ist lösbar oder fest mit dem Magazinblech, insbesondere mittels Schrauben und/oder Nieten und/oder Stiften, verbunden. Die Magazineinlagen können einfach ausgetauscht werden, sodass eine Vielzahl von unterschiedlichen Adaptern im Magazin aufgenommen werden können, ohne dabei das gesamte Magazin auszutauschen.

Die Magazineinlage umfasst vorzugsweise wenigstens einen Steg, wobei der wenigstens eine Steg das Betätigungselement zur Betätigung des Verriegelungsbolzens bildet. Vorteilhafterweise weist der wenigstens eine Steg wenigstens eine Einführungsschräge zum Einführen des Adapters in das Magazin auf. Der Steg weist vorzugsweise ein freies Ende auf, welches an der sich parallel zur y-Achse erstreckenden Kante und/oder an der sich parallel zur z-Achse erstreckenden Kante eine Einführungsschräge umfasst. Folglich wird die relative Positionierung des Adapters zum Magazin erleichtert, sodass ein schnelleres und zuverlässigeres Einführen ermöglicht wird.

Eine weitere vorteilhafte Ausführungsform sieht vor, dass das wenigstens eine Betätigungselement als wenigstens eine gegenüber dem ersten Magazinblech hervorstehende und im Wesentlichen parallel zur z-Achse erstreckende Betätigungswand ausgebildet ist. Die Betätigungswand kann eine dem Verriegelungsbolzen zugewandte Betätigungsseite aufweisen, wobei die Betätigungsschräge an der Betätigungsseite vorgesehen ist. Ferner kann die Betätigungswand eine vom Verriegelungsbolzen abgewandte Führungsseite aufweisen, wobei die Führungsseite im Wesentlichen parallel zur z-Achse ausgebildet ist. Es ist denkbar, dass zwei Führungswände vorgesehen sind, wobei im eingeführten Zustand der Adapter zwischen den beiden Betätigungswänden angeordnet ist. Die Führungswände können dabei entlang der y-Achse links und rechts vom Adapter angeordnet sein. Wenn der wenigstens eine Verriegelungsbolzen einseitig ausgebildet ist, ist es ferner denkbar, dass eine Betätigungswand mit seiner Betätigungsseite zum Adapter gerichtet ist und dass eine Betätigungsseite mit seiner Betätigungswand zum Adapter gerichtet ist. Demnach kann einerseits der Verriegelungsbolzen betätigt werden und andererseits der Adapter geführt werden.

Ferner ist es denkbar, dass die Betätigungsseite mehrere Betätigungsschrägen vorsieht. Die Betätigungsseite kann eine Betätigungsschräge gegenüber der y-Achse und gegenüber der z-Achse vorsehen. Somit ist der Adapter entlang der y-Achse und/oder der z-Achse in das Magazin einführbar. Zudem kann die Betätigungsseite zwei Betätigungsschrägen gegenüber der y-Achse vorsehen, wobei die Betätigungsschrägen entlang der y-Achse zur Mitte der Betätigungsseite zusammentreffen und vorzugsweise eine gegenüber der Betätigungswand hervorstehende Spitze bilden. Die Spitze ist vorzugsweise derart vorgesehen, dass diese mit dem Verriegelungsbolzen im Eingriff steht, wenn der Adapter in der Magazinposition angeordnet ist. Demnach kann die Betätigungswand sowohl links als auch rechts eingesetzt werden und mit einem Verriegelungsbolzen in Eingriff kommen, je nachdem in welche Richtung der Verriegelungsbolzen gerichtet ist.

Die Betätigungswand ist vorzugsweise parallel zur z-Achse in das erste Magazinblech und/oder in das zweite Magazinblech und/oder in die Magazineinlage einsteckbar. Dazu sieht die Betätigungswand vorzugsweise an einer dem ersten Magazinblech zugewandten Unterseite eine Einsteckabschnitt vor, welcher im Querschnitt kleiner als der restliche Betätigungsabschnitt ist. Demnach kann die Betätigungswand einfach und schnell montiert und demontiert werden. Es ist insbesondere denkbar, dass die Steckplätze der beiden Betätigungswände getauscht werden, um dem Verschleiß an einer Betätigungswand zu begegnen.

Eine vorteilhafte Ausführungsform sieht vor, dass die Betätigungswand einen Kern und einen Mantel aufweist, wobei der Kern ein Metall, insbesondere Blech, und der Mantel einen Kunststoff umfasst. Demnach kann eine formstabile Betätigungswand vorgesehen werden, wobei gleichzeitig aufgrund des Mantels ein geringer Verschleiß am Verriegelungsbolzen auftritt.

Eine weitere vorteilhafte Ausführungsform sieht vor, dass der Adapter wenigstens eine kulissenartige Führungsausnehmung aufweist, die so ausgebildet ist, dass beim Einführen des Adapters in das Magazin der wenigstens eine Steg in die wenigstens eine Führungsausnehmung eingreift. Demnach ist der Adapter parallel zur z-Achse am Magazin gelagert. Die wenigstens eine Einführungsschräge des wenigstens einen Stegs ist insbesondere auf die Führungsausnehmung angepasst.

Vorteilhafterweise ist die wenigstens eine Führungsausnehmung als entlang der y-Achse erstreckende Nut mit einem Nutboden im Adapter ausgebildet. Dabei kann die Nut auch als Zarge ausgebildet sein.

Es ist vorteilhaft, wenn der Wechselkopf ein Wechselkopfgehäuse und/oder der Adapter ein Adaptergehäuse aufweist. Der Verriegelungsbolzen ist vorzugsweise im Wechselkopfgehäuse und/oder im Adaptergehäuse angeordnet. In der Verriegelungslage steht der dritte Abschnitt des Verriegelungsbolzens gegenüber dem Wechselkopfgehäuse und/oder dem Adaptergehäuse hervor, sodass er sowohl von wenigstens einem Betätigungselement als auch vom Bediener einfach betätigbar ist. In der Freigabelage ist der dritte Abschnitt des Verriegelungsbolzens bündig gegenüber dem Wechselkopfgehäuse und/oder dem Adaptergehäuse, insbesondere gegenüber der Nut und vorzugsweise gegenüber dem Nutboden, ausgebildet.

Eine weitere vorteilhafte Ausführungsform sieht vor, dass das Magazin ein erstes Betätigungselement und ein zweites Betätigungselement aufweist, wobei insbesondere die Magazineinlage einen ersten Steg und einen zweiten Steg aufweist und/oder wobei insbesondere das erste Magazinblech eine erste Betätigungswand und eine zweite Betätigungswand aufweist. Der Adapter ist unterseitig in das Magazin einführbar, wobei das Magazin z.B**.** auf einem Boden und der Wechselkopf in der Magazinposition oberhalb des Magazins, insbesondere oberhalb der Magazineinlage, angeordnet ist. Der Adapter ist auch oberseitig in das Magazin einführbar, wobei das Magazin z.B**.** an einer Decke und der Wechselkopf in der Magazinposition unterhalb des Magazins, insbesondere unterhalb der Magazineinlage, angeordnet ist. In der Magazinposition wirkt entweder das erste Betätigungselement oder das zweite Betätigungselement, insbesondere der erste Steg oder der zweite Steg bzw. die erste Betätigungswand oder die zweite Betätigungswand, mit dem wenigstens einen Verriegelungsbolzen zusammen.

Ferner ist es vorteilhaft, wenn der Adapter wenigstens ein Halteeinrichtung zum Fixieren des Adapters im Magazin aufweist, wobei vorzugsweise die wenigstens eine Halteeinrichtung als wenigstens einer im Adapter angeordneter Kugeldruckbolzen ausgebildet ist. Die Halteeinrichtung ist erstreckt sich vorzugsweise parallel zur x-Achse. In der Magazinposition kommt die Halteeinrichtung mit einer Einbuchtung im Magazin, insbesondere in der Magazineinlage und/oder im ersten Magazinblech zum Eingriff. Die Halteeinrichtung kann insbesondere vorgesehen sein, wenn der Verriegelungsbolzen im Wechselkopf angeordnet ist, sodass der Adapter sicher in der Magazinposition im Magazin festgesetzt ist.

Zudem wird die der Erfindung zugrundeliegende Aufgabe ebenfalls durch ein Magazin zur Lagerung eines Adapters für eine Handhabungseinrichtung gelöst, das Magazin umfassend ein erstes Magazinblech, ein zweites Magazinblech, eine Magazineinlage und wenigstens ein Betätigungselement, wobei das erste Magazinblech mittels Elastomer-Ausnahmebuchsen am zweiten Magazinblech schwimmend gelagert ist, wobei die Magazineinlage lösbar oder fest am ersten Magazinblech angeordnet ist, und wobei das Betätigungselement als wenigstens ein Steg und/oder als wenigstens eine Betätigungswand ausgebildet ist. Der Steg ist vorzugsweise an der Magazineinlage angeordnet. Die Betätigungswand ist vorzugsweise in das erste Magazinblech einsteckbar und mit diesem verschweißbar.

Ferner wird die der Erfindung zugrundeliegende Aufgabe auch durch eine Handhabungseinrichtung mit den Merkmalen des Anspruchs 16 gelöst.

Weitere Einzelheiten und vorteilhafte Ausgestaltungen der Erfindung sind der nachfolgenden Beschreibung zu entnehmen, anhand derer mehrere Ausführungsbeispiele näher beschrieben und erläutert sind. Es zeigen:
- Fig. 1a: perspektivische Ansicht einer ersten Ausführungsform eines Wechselsystems, wobei sich ein Adapter vor einem Magazin befindet;
- Fig. 1b: perspektivische Ansicht des Wechselsystems, gemäß Fig. 1a, wobei sich der Adapter in der Magazinposition befindet;
- Fig. 1c: perspektivische Ansicht des Wechselsystems, gemäß Fig. 1a, wobei ein Wechselkopf von dem Adapter gelöst ist;
- Fig. 1d: Explosionsansicht des Adapters des Wechselsystems gemäß Fig. 1a;
- Fig. 2a: Schnittansicht entlang der x-Achse durch Adapter und Magazin gemäß Fig. 1a (Verriegelungsbolzen in Verriegelungslage);
- Fig. 2b: Schnittansicht entlang der x-Achse durch Adapter und Magazin gemäß Fig. 1b (Verriegelungsbolzen in Freigabelage);
- Fig. 3a: perspektivische Ansicht der Magazineinlage gemäß Fig. 1a;
- Fig. 3b: perspektivische Ansicht der Magazineinlage gemäß Fig. 3a im Schnitt;
- Fig. 4a: perspektivische Ansicht des Magazins gemäß Fig. 1a mit einem ersten Magazinblech und einem zweiten Magazinblech;
- Fig. 4b: perspektivische Ansicht des Magazins gemäß Fig. 1a mit einem ersten Magazinblech;
- Fig. 5: perspektivische Ansicht eines Magazins gemäß Fig. 1a mit einem ersten Magazinblech und mit einer demontierten Magazineinlage;
- Fig. 6a: perspektivische Ansicht einer Handhabungseinrichtung einer zweiten Ausführungsform eines Wechselsystems, wobei der Verriegelungsbolzen im Wechselkopf angeordnet ist;
- Fig. 6b: Seitenansicht der Handhabungseinrichtung gemäß Fig. 6a;
- Fig. 6c: perspektivische Ansicht der Handhabungseinrichtung gemäß Fig. 6a, wobei ein Verriegelungsbolzen linksseitig und ein Verriegelungsbolzen rechtsseitig angeordnet ist;
- Fig. 7a: Oberansicht eines Magazins gemäß der zweiten Ausführungsform, wobei sich ein Adapter vor dem Magazin befindet;
- Fig. 7b: Oberansicht des Magazins gemäß Fig. 7a, wobei der Adapter im Eingriff mit einem Betätigungselement ist;
- Fig. 7c: Oberansicht des Magazins gemäß Fig. 7a, wobei sich der Adapter in der Magazinposition befindet;
- Fig. 8a: Seitenansicht eines Wechselkopfs gemäß Fig. 6a, wobei sich der Verriegelungsbolzen in der Freigabelage befindet (entsprechend dem Zustand gemäß Fig. 7c);
- Fig. 8b: Oberansicht des Wechselkopfs gemäß Fig. 8a;
- Fig. 9a: Seitenansicht eines Wechselkopfs gemäß Fig. 6a, wobei sich der Verriegelungsbolzen in der Verriegelungslage befindet (entsprechend dem Zustand gemäß Fig. 7a);
- Fig. 9b: Oberansicht des Wechselkopfs gemäß Fig. 9a;
- Fig. 10: Explosionsansicht eines Wechselkopfs mit Verriegelungsbolzen;
- Fig. 11: perspektivische Ansicht des Wechselsystems, gemäß der zweiten Ausführungsform, wobei der Wechselkopf von dem Adapter gelöst ist;
- Fig. 12: Oberansicht eines Magazins gemäß Fig. 7a, wobei Führungswände entgegengesetzt, also linksseitig, orientiert sind;
- Fig. 13a: Schnittansicht durch Magazin und Adapter gemäß Fig. 7a;
- Fig. 13b: perspektivische Ansicht einer Magazineinlage gemäß Fig. 13a;
- Fig. 14a: perspektivische Ansicht eines Magazins gemäß der zweiten Ausführungsform;
- Fig. 14b: Vorderansicht des Magazins gemäß Fig. 14a;
- Fig. 14c: Explosionsansicht des Magazins gemäß Fig. 14a;
- Fig. 14d: perspektivische Schnittansicht des Magazins gemäß Fig. 14a;
- Fig. 14e: Schnittansicht des ersten Magazinblechs und der Führungswände gemäß Fig. 14a;
- Fig. 14f: Schnittansicht einer Betätigungswand gemäß Fig. 14a;
- Fig. 14g: weitere Schnittansicht einer Betätigungswand gemäß Fig. 14a;
- Fig. 15a: Schnittansicht eines Adapters gemäß der zweiten Ausführungsform;
- Fig. 15b: Explosionsansicht eines Adapters gemäß Fig. 15a;
- Fig. 15c: perspektivische Ansicht eines Adapters gemäß Fig. 15a; und
- Fig. 15d: perspektive Ansicht eines zweiteiligen Adapters gemäß der zweiten Ausführungsform.

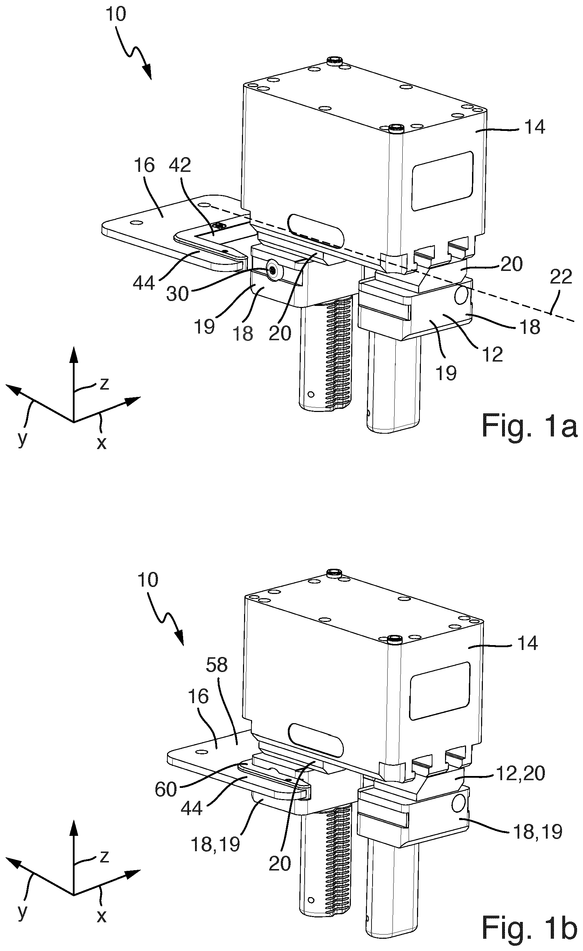

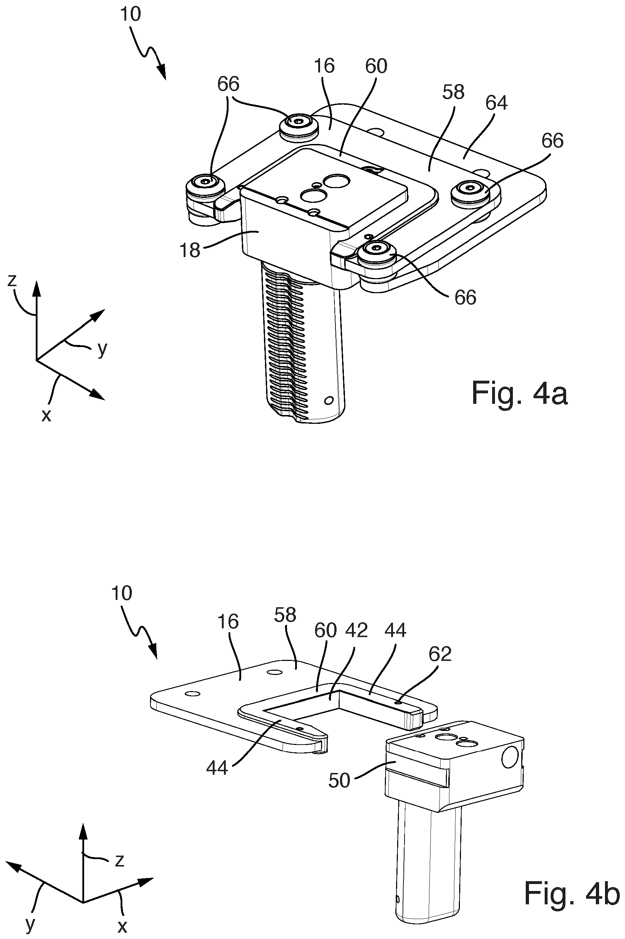

In den Fig. 1a bis 5 ist eine erste Ausführungsform eines erfindungsgemäßen Wechselsystems in Form eines Backenwechselsystems 10 gezeigt. In den Fig. 1a-1d ist ein Backenwechselsystem 10 zum lösbaren Anordnen von Greifbacken 12 an einem Greifer 14 dargestellt. Der Greifer 14 kann als Parallel-, Zentrisch- oder Vierbackengreifer sowie pneumatisch, elektrisch und/oder mechatronisch antreibbar ausgebildet sein. Der Greifer 14 kann an einem nicht dargestellten Roboterarm angeordnet sein. Das Backenwechselsystem 10 umfasst ein Magazin 16 zum Bestücken des Greifers 14 mit unterschiedlichen Adaptern 18. Die am Greifer 14 montierte Greifbacke 12 ist zweiteilig aufgebaut und umfasst einen Wechselkopf 20 und den auf den Wechselkopf 20 befestigbaren Adapter 18. Der Adapter 18 wird bewegungssteif mit dem Wechselkopf 20 verbunden, sodass eine Verlagerung des Wechselkopfs 20 entlang der Greifrichtung 22 durch den Greifer 14 auch zu einer Verlagerung des Adapters 18 führt.

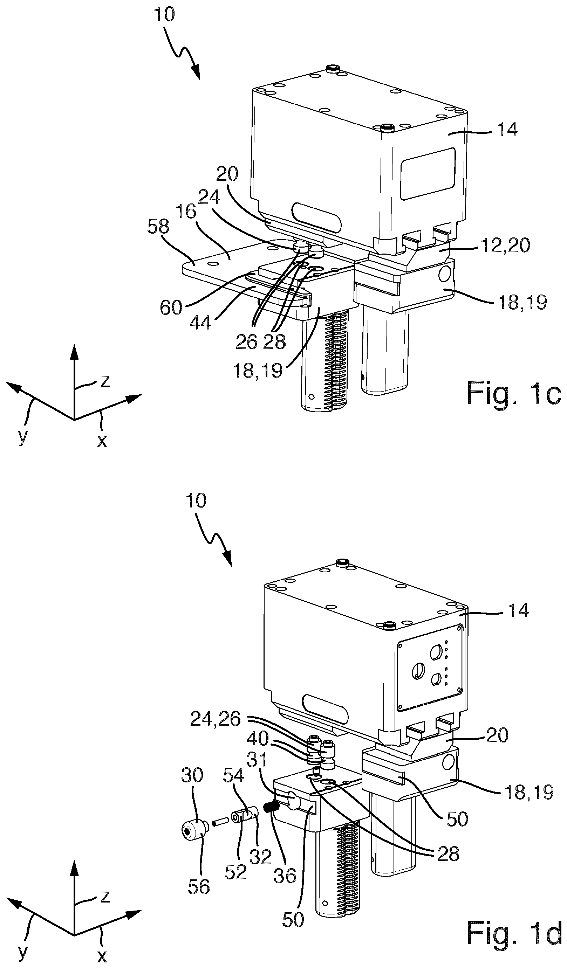

Gemäß Fig. 1c weist der Wechselkopf 20 einen Einführabschnitt 24 mit zwei parallel zur z-Achse erstreckenden Einführbolzen 26 auf. Der Adapter 18 weist ein Adaptergehäuse 19 mit zwei Aufnahmen 28 auf, in welche die zwei Einführbolzen 26 einführbar sind. Zur Festsetzung des Adapters 18 am Wechselkopf 20 umfasst der Adapter 18 einen in Figur 1d gezeigten Verriegelungsbolzen 30, welcher in einer sich parallel zur x-Achse erstreckenden Sacklochbohrung 31 angeordnet ist. Die Sacklochbohrung 31 ist entlang der y-Achse zwischen den beiden Aufnahmen 28 angeordnet, wobei sich diese innerhalb des Adaptergehäuses 19 schneiden. Somit können der Verriegelungsbolzen 30 und die Einführbolzen 26 dort zusammenwirken. Der Verriegelungsbolzen 30 ist parallel zur x-Achse zwischen einer Verriegelungslage und einer Freigabelage verlagerbar.

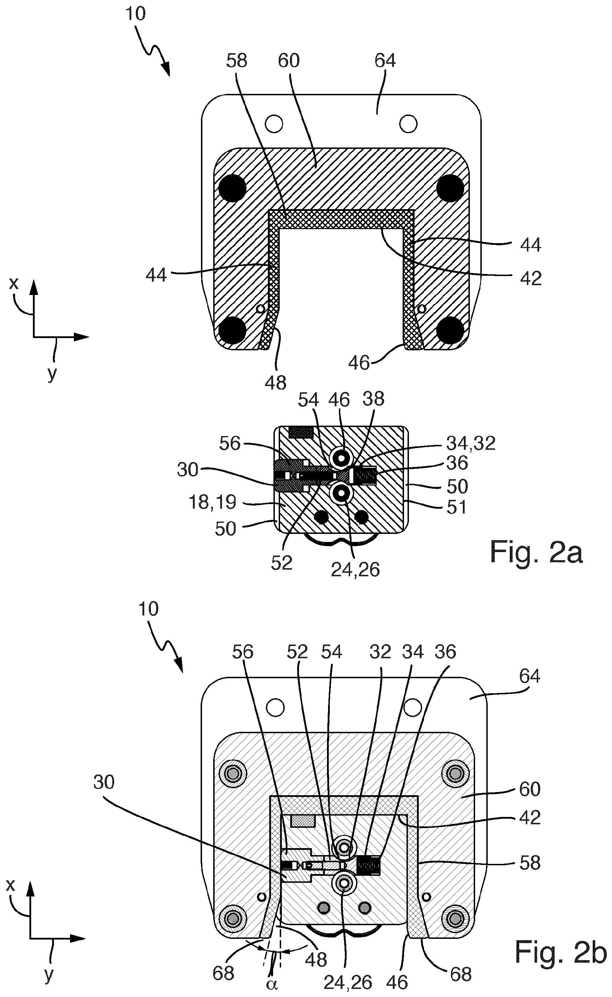

Gemäß Fig. 2a und 2b weist der Verriegelungsbolzen 30 einen inneren ersten Abschnitt 32 auf, welcher eine Federaufnahme 34 in der Form eines Hohlzylinders zur Aufnahme einer Feder 36 aufweist. Die Feder 36 stützt sich am Boden der Sacklochbohrung 31 ab und drängt den Verriegelungsbolzen 30 in die Verriegelungslage, wobei der Verriegelungsbolzen 30 in der Verriegelungslage, die in Figur 2a gezeigt ist, gegenüber dem Adaptergehäuse 19 hervorsteht. In der Verriegelungslage hintergreifen die Einführbolzen 26 den Verriegelungsbolzen 30, wobei eine am ersten Abschnitt 32 angeordnete Verriegelungsschräge 38 mit jeweils einem an den Einführbolzen 26 angeordneten Klemmabschnitt 40 zusammenwirkt. In der Verriegelungslage werden die Einführbolzen 26 durch den Verriegelungsbolzen 30 in den Aufnahmen 28 festgesetzt. In Fig. 1a befindet sich der Verriegelungsbolzen 30 in der Verriegelungslage, sodass der Adapter 18 fest mit dem Wechselkopf 20 verbunden ist.

In Fig. 1a ist der Greifer 14 unmittelbar vor dem Magazin 16 positioniert. Diese Position ist zu wählen, um den Adapter 18 mittels des Magazins 16 vom Wechselkopf 20 zu lösen. Dazu wird der Adapter 18 parallel zur y-Achse in das Magazin 16 eingeführt bis er am definierten Magazinanschlag 42 zum Kontakt kommt. In Fig. 1b, sowie in der Figur 2b, ist gezeigt, wie sich der Adapter 18 in der Magazinposition befindet. Durch das Einführen des Adapters 18 in das Magazin 16 wird der Adapter 18 entriegelt, sodass gemäß Fig. 1c der Wechselkopf 20 vom Adapter 18 gelöst werden kann und der Adapter 18 im Magazin 16 verbleibt.

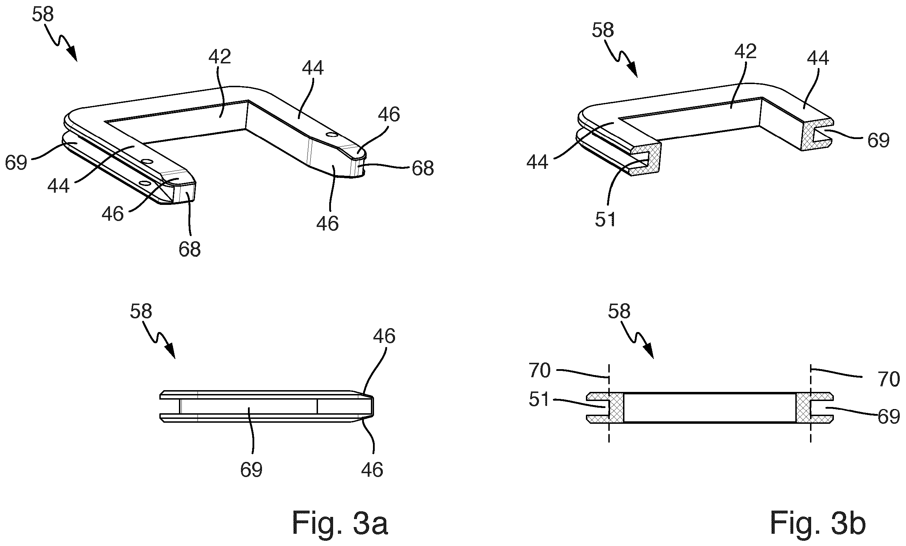

Beim Einführen des Adapters 18 in das Magazin wird der Verriegelungsbolzen 30 entriegelt. Dazu weist das Magazin 16 gemäß Fig. 2b und 3a zwei Stege 44 mit jeweils einer Einführungsschräge 46 und einer Betätigungsschräge 48 auf. Die Stege 44 greifen gemäß Fig. 1b und 2b in eine kulissenartige Führungsausnehmung 50 in Form von zwei parallel zur y-Achse erstreckenden Nuten mit jeweils einem Nutboden 51 des Adapters 18 ein, wobei die Einführungsschrägen 46 zur vereinfachten Positionierung des Adapters 18 am Magazin 16 vorgesehen sind. Dabei gelangt die Betätigungsschräge 48 in Kontakt mit dem Verriegelungsbolzen 30 und verlagert durch Bewegung parallel zur y-Achse diesen gleichmäßig parallel zur x-Achse entgegen der Federkraft der Feder 36 in die Freigabelage, wobei der Verriegelungsbolzen 30 bündig gegenüber dem Adaptergehäuse 19, insbesondere gegenüber der Nut und vorzugsweise gegenüber dem Nutboden 51, positioniert ist. Die Betätigungsschräge 48 schließt gemäß Fig. 2b mit dem Adaptergehäuse 19 einen Winkel α ein, welcher vorzugsweise größer als 5°, insbesondere größer als 10° und vorzugsweise größer als 15° ausgebildet ist und/oder kleiner als 35°, insbesondere kleiner als 30° und bevorzugt kleiner als 25° ausgebildet ist. Dabei gelangt die Verriegelungsschräge 38 des Verriegelungsbolzens 30 aus dem Eingriff mit den Einführbolzen 26. Zum Freisetzen des Adapters 18 sieht der Verriegelungsbolzen 30 gemäß Fig. 2a und 2b einen mittleren zweiten Abschnitt 52 mit einer Bolzenausnehmung 54 vor. In der Freigabelage können die Einführbolzen 26 durch die Bolzenausnehmung 54 hindurch aus den Aufnahmen 28 geführt werden, sodass der Adapter 18 vom Wechselkopf 20 lösbar ist.

In den Fig. 1b, 1c und 2b befindet sich der Verriegelungsbolzen 30 in der Freigabelage. Durch die relative Bewegung des Wechselkopfs 20 parallel zur z-Achse wird der Wechselkopf 20 vom Adapter 18 gelöst. Durch den Eingriff der Stege 44 in die Führungsausnehmungen 50 verbleibt der Adapter 18 im Magazin 16. Ferner weist der Verriegelungsbolzen 30 einen äußeren dritten Abschnitt 56 auf, welcher mit dem Steg 44 zusammenwirkt und dabei so ausgelegt ist, dass der Adapter 18 im Magazin 16 auch ohne den Wechselkopf 20 verlustsicher in seiner Position gehalten wird. Der erste Abschnitt 32 und/oder der zweite Abschnitt 52 und/oder der dritte Abschnitt 56 des Verriegelungsbolzens 30 können einteilig ausgebildet sein.

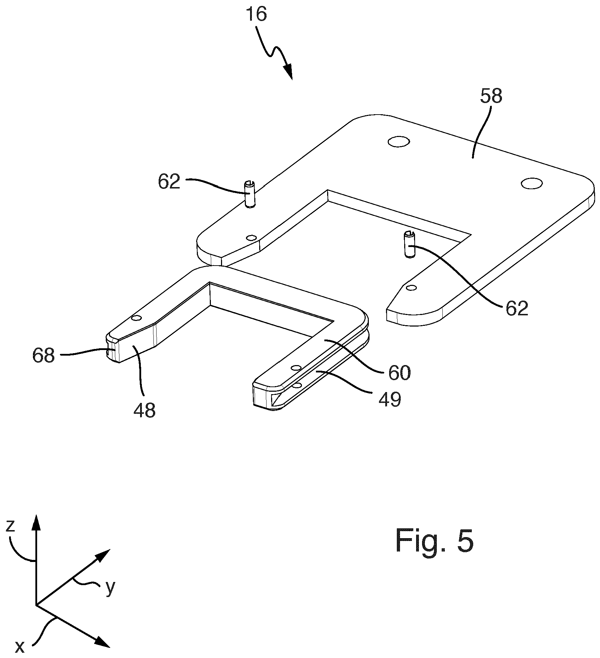

In den Fig. 3a und 3b sind zwei Ausführungsformen des Magazins 16 gezeigt. In Fig. 3b weist das Magazin 16 ein erstes Magazinblech 58 und eine am ersten Magazinblech 58 angeordnete Magazineinlage 60 auf. Die Magazineinlage 60 ist mittels Stiften 62 am ersten Magazinblech 58 fest gelagert. In Fig. 3a weist das Magazin 16 zusätzlich ein zweites Magazinblech 64 auf, wobei das erste Magazinblech 58 mittels Elastomer-Aufnahmebuchse 66 am zweiten Magazinblech 64 schwimmend gelagert ist. Demnach ist das Magazin 16 beweglich bzw. nachgiebig ausgebildet, sodass der Adapter 18 auch bei einer abweichenden Positionierung in das Magazin 16 eingeführt werden kann und das Magazin 16 dabei keinen Schaden erleidet. Folglich kann der Adapter 18 auch schräg auf das Magazin 16 zufahren und der Winkel des Einführspiels wird anhand der schwimmenden Lagerung vergrößert. Ferner ist es vorteilhaft, dass das Magazin 16 zwei- bzw. dreiteilig ausgebildet ist. Demnach kann bei Verschleiß, wie in Fig. 5 angedeutet, nur die mit dem Adapter 18 in Eingriff kommende Magazineinlage 60 ausgetauscht werden.

In Fig. 3a und 3b ist eine Magazineinlage 60 gezeigt, wobei diese an ihrem freien Ende 68 die Einführungsschrägen 46 und/oder die Betätigungsschrägen 48 aufweist. Ferner ist die Magazineinlage 60, insbesondere an den Stegen 44, parallel zur y-Achse im Querschnitt U-förmig durch eine Nut 69 ausgebildet, wobei die Öffnung zum nicht dargestellten Adapter 18 abgewandt angeordnet ist. Dadurch wird eine Sollbruchstelle 70 der Magazineinlage 60 bereitgestellt, sodass bei einer Kollision oder einer fehlerhaften Positionierung des Adapters 18 oder des Wechselkopfs 20 der Roboterarm, der Greifer 14, die Greiferbacke 12 und die Magazinbleche 58, 64 keinen Schaden erleiden, sondern nur die Magazineinlage 60 im Bereich der Sollbruchstelle 70 nachgibt bzw. bricht. Die Nachgiebigkeit wird ebenfalls dadurch erzielt, dass die Magazineinlage 60 aus einem geeigneten Kunststoff ausgebildet ist.

Ferner ist es möglich, dass der Adapter 18 in zwei Orientierungen in das Magazin 16 einführbar ist. Der Wechselkopf 20 kann beim Einführen des Adapters 18 oberhalb oder unterhalb der Magazineinlage 60 angeordnet sein, wobei nur ein Steg 44 mit dem Verriegelungsbolzen 30 zusammenwirkt. Demnach kann das Backenwechselsystem 10 unter anderem sowohl am Hallenboden als auch an der Hallendecke eingesetzt werden.

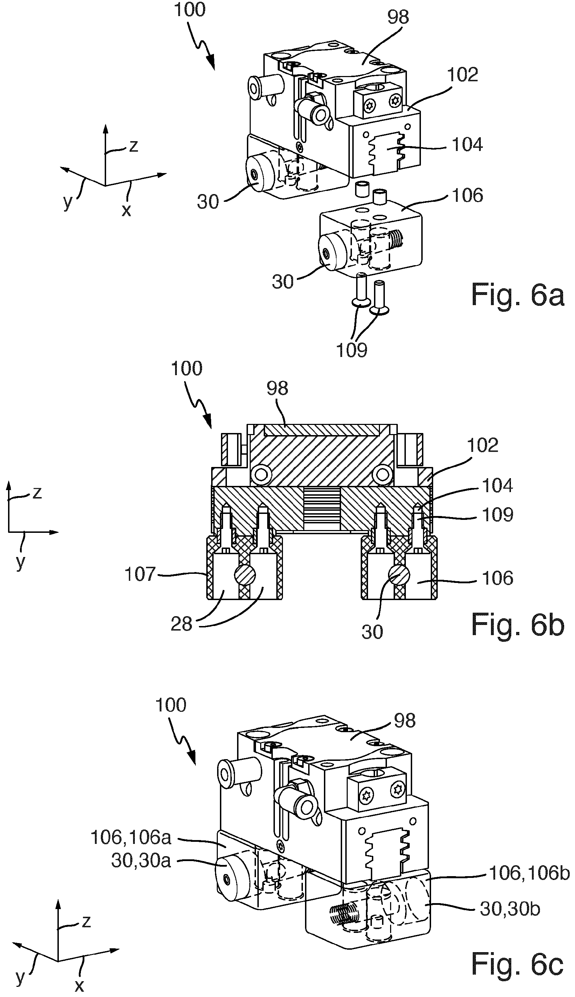

In den Fig. 6a bis 15d ist eine Handhabungseinrichtung 98 zur Verwendung in einer zweiten Ausführungsform eines erfindungsgemäßen Backenwechselsystems 100 gezeigt, wobei für gleiche Komponenten der Backenwechselsysteme 10 und 100 dieselben Bezugszeichen gewählt wurden. Die Handhabungseinrichtung 98 umfasst gemäß Fig. 6a bis 6c ein Greifergehäuse 102, zwei im Greifergehäuse geführte Führungsbacken 104, zwei Wechselköpfe 106. An die zwei Wechselköpfe 106 kann jeweils ein Adapter 108 angeordnet werden.

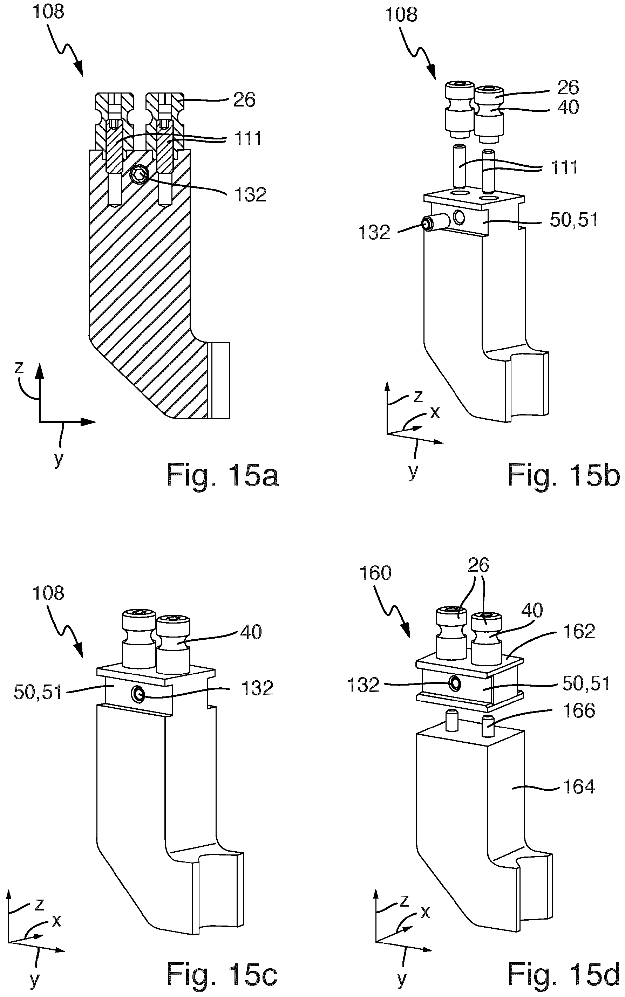

Im Backenwechselsystem 100 ist - entgegen der ersten Ausführungsform - der Verriegelungsbolzen 30 im Wechselkopf 106 und nicht im Adapter 108 vorgesehen. Demnach muss ein einziger Verriegelungsmechanismus im Wechselkopf 106 vorgesehen werden, um eine Vielzahl von Adaptern 108 an den Wechselkopf 106 anzubringen. Dazu ist eine sich parallel zur x-Achse erstreckende Sachlochbohrung 31 im Wechselkopf 106 zur Aufnahme des Verriegelungsbolzens 30 vorgesehen. Ferner sind die Einführbolzen 26 - entgegen der ersten Ausführungsform - im oder am Adapter 108 und nicht im Wechselkopf 106 vorgesehen. Die Einführbolzen 26 sind gemäß Fig. 15a mittels Gewindestiften 111 mit dem Adapter 108 verschraubt. Demnach weist der Wechselkopf 106 ein Wechselkopfgehäuse 107 mit zwei im Wechselkopfgehäuse 107 vorgesehenen Aufnahmen 28 zur Aufnahme der Einführbolzen 26 auf.

Der Wechselkopf 106 sieht gemäß Fig. 6b je Wechselkopf 106 zwei Befestigungsmittel 109 in Form von Schrauben oder Nieten zur Befestigung des Wechselkopfs 106 an der Führungsbacke 104 vor. Die Führungsbacke 104 und der Wechselkopf 106 können alternativ einteilig ausgebildet sein.

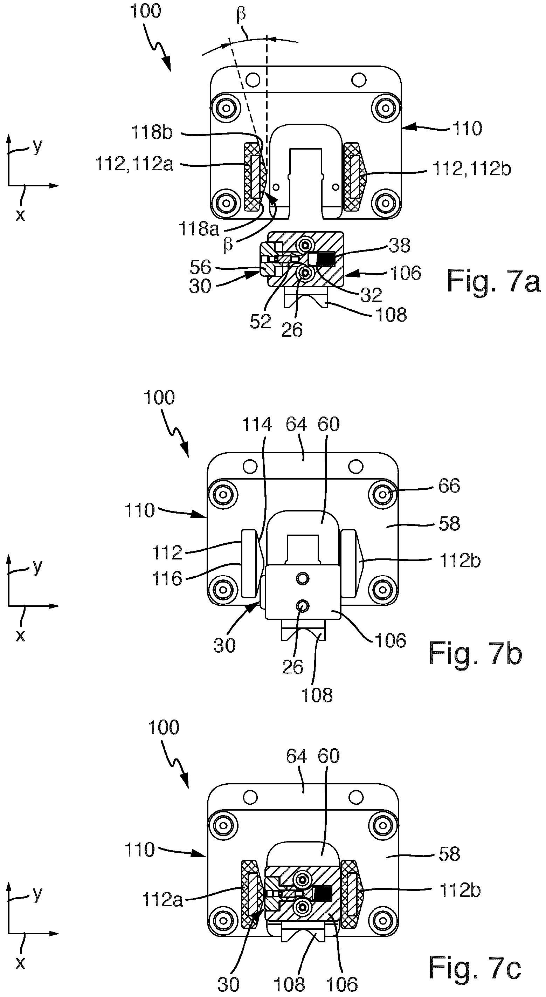

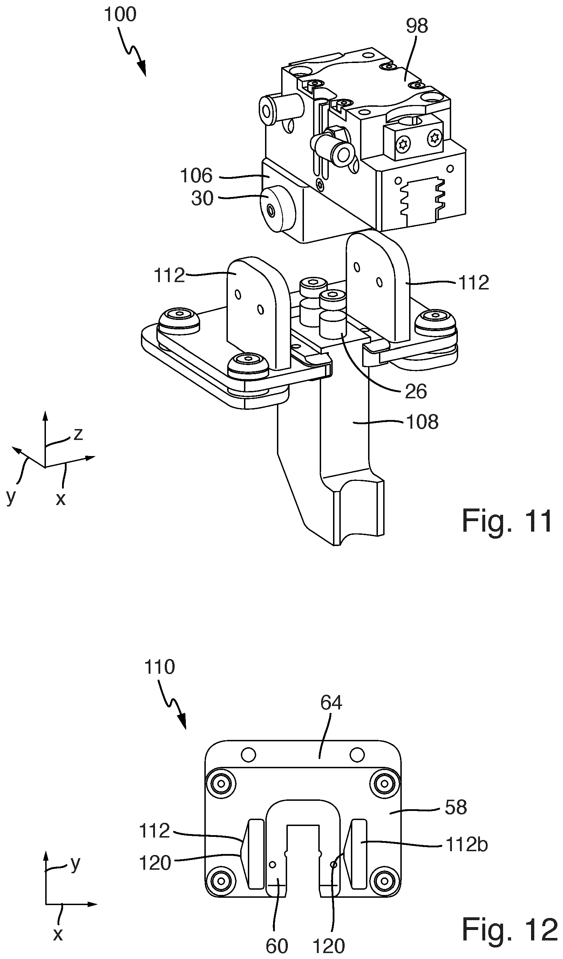

Gemäß Fig. 6c ist es denkbar, die Wechselköpfe 106 entlang der x-Achse entgegengesetzt am Greifergehäuse 102, insbesondere an der Führungsbacke 104, anzuordnen, sodass einer erster Wechselkopf 106a mit einem ersten Verriegelungsbolzen 30a linkseitig und ein zweiter Wechselkopf 106b mit einem zweiten Verriegelungsbolzen 30b rechtsseitig angeordnet ist. Dies ist auch für die Handhabungseinrichtung 14 gemäß der ersten Ausführungsform möglich. Dabei kann der Wechselkopf 106a mit dem linksseitig angeordneten Verriegelungsbolzen 30a zu einem Magazin 110 gemäß Fig. 7a bis 7c angefahren werden und der Wechselkopf 106b mit dem rechtsseitig angeordneten Verriegelungsbolzen 30b zu einem Magazin 110 gemäß Fig. 12 angefahren werden.

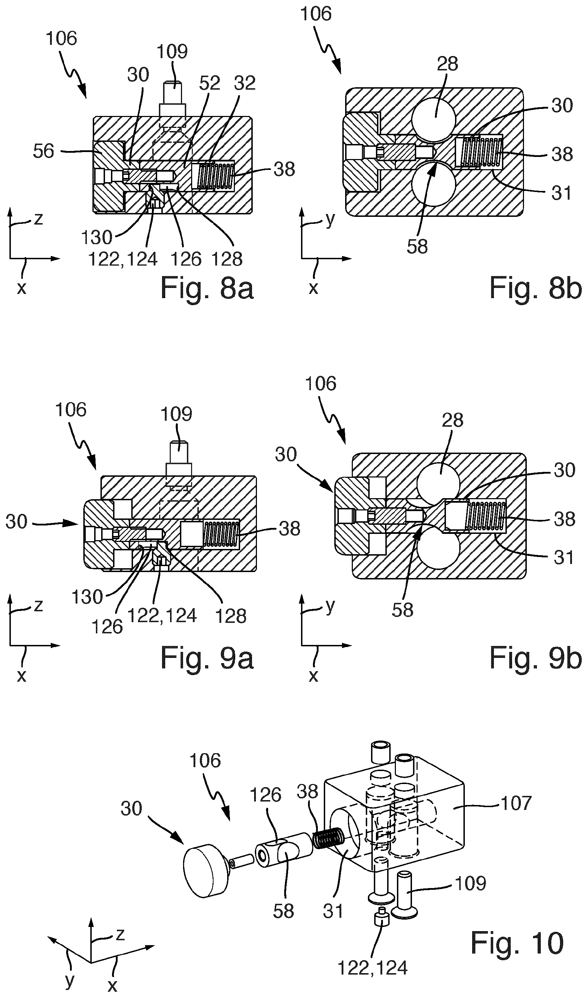

In den Fig. 7a bis 7c ist ein Anfahrvorgang der Handhabungseinrichtung 98 an ein Magazin 110 gemäß der zweiten Ausführungsform gezeigt. In Fig. 7a ist die Handhabungseinrichtung 98 vor dem Magazin 110 positioniert. Dabei befindet sich der Verriegelungsbolzen 30 gemäß den Fig. 9a und 9b in der Verriegelungslage, sodass der Wechselkopf 106 und der Adapter 108 nicht voneinander lösbar sind. Der Verriegelungsbolzen 30 steht in der Verriegelungslage gegenüber dem Wechselkopf 106 hervor.

In Fig. 7b fährt die Handhabungseinrichtung 98 parallel zur y-Achse in das Magazin 110 hinein. Dabei gelangt der Verriegelungsbolzen 30 in Eingriff mit einem Betätigungselement in Form einer Betätigungswand 112. Die Betätigungswand 112 weist eine dem Verriegelungsbolzen 30 zugewandte Betätigungsseite 114 und eine dem Verriegelungsbolzen 30 abgewandte Führungsseite 116 auf. Die Betätigungswand 112 sieht an der Betätigungsseite 114 eine erste Betätigungsschräge 118a und eine zweite Betätigungsschräge 118b vor, welche einen Winkel β gegenüber der y-Achse einschließen. Demnach wird beim Einführen des Adapters 108 in das Magazin 110 der Verriegelungsbolzen 30 gleichmäßig betätigt. Die Betätigungsschrägen 118a, 118b treffen mittig der Betätigungswand 112 zu einer Betätigungsspitze 120 zusammen. Die Führungsseite 116 ist parallel zur y-Achse ausgebildet. Das Magazin 110 sieht eine erste Betätigungswand 112a und eine zweite Betätigungswand 112b auf, wobei bei der ersten Betätigungswand 112a die Betätigungsseite 114 und bei der zweiten Betätigungswand 112b die Führungsseite 116 zur Handhabungseinrichtung 98 gerichtet sind. Demnach dient die Führungsseite 116 zur verbesserten Führung der Handhabungseinrichtung 98 im Magazin 110 und als Konterelement beim Betätigen des Verriegelungsbolzens 30 durch die erste Betätigungswand 112a. Es ist denkbar, dass die Betätigungswände 112 hinsichtlich der Orientierung der Spitze 120 um 180° um die z-Achse gedreht werden und/oder hinsichtlich der Position links und rechts getauscht werden.

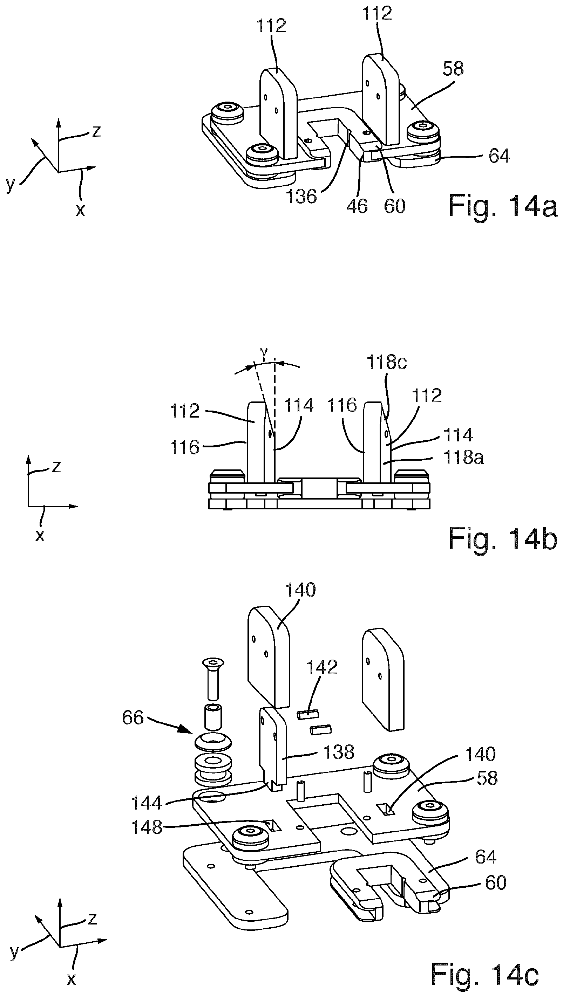

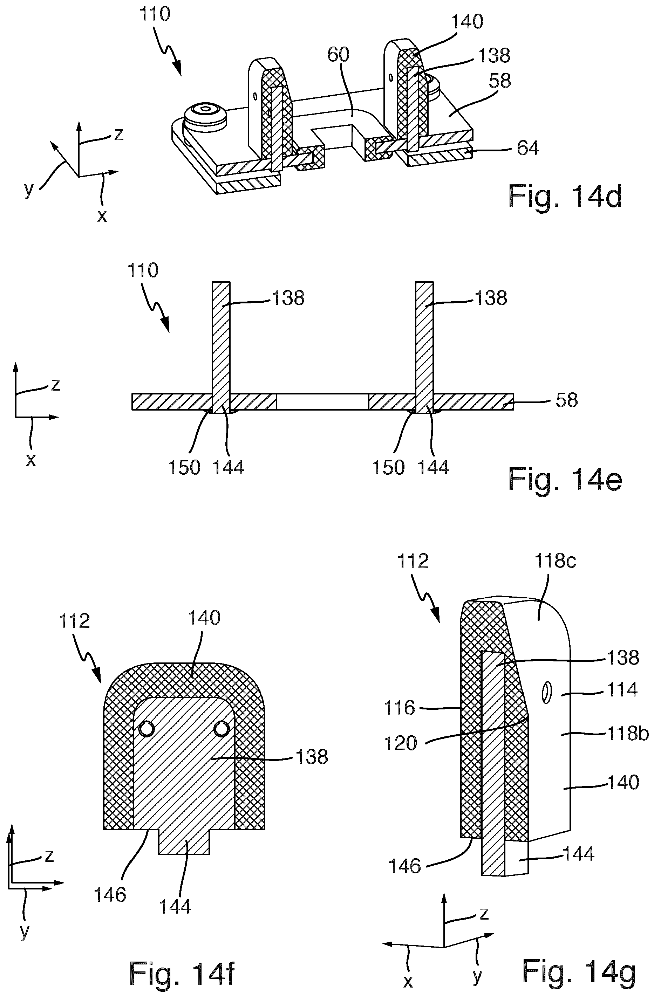

Die Betätigungswände 112 weisen gemäß Fig. 14b ferner auf der Betätigungsseite 114 eine dritte Betätigungsschräge 118c auf, welche einen Winkel γ mit der z-Achse einschließt. Die Betätigungsschräge 118c mündet ebenfalls in die Spitze 120. Demnach kann die Handhabungseinrichtung 98 auch entlang der z-Achse in das Magazin 110 eingefahren und dabei der Verriegelungsbolzen 30 betätigt werden, wobei in dem Fall eine andere Orientierung der Führungsausnehmungen 50 am Adapter 108 vorzusehen sind.

In Fig. 14c bis 14g ist ersichtlich, dass die Betätigungswände 112 zweiteilig aufgebaut sind. Die Betätigungswand 112 sieht einen Wandkern 138 und einen den Wandkern 138 umhüllenden Wandmantel 140 vor. Der Wandkern 138 ist vorzugsweise aus einem Metall, insbesondere Blech, um der Betätigungswand 112 eine geeignete Festigkeit zu verleihen, welche zum Betätigen des Verriegelungsbolzens 30 erforderlich ist. Ferner ist der Wandmantel 140 aus einem Kunststoff ausgebildet, um Verschleiß bei der Vielzahl von Betätigungsvorgängen entgegenzuwirken. Der Wandkern 138 und der Wandmantel 140 sind mittels zweier Wandbolzen 142 miteinander verbunden. Es ist ferner ersichtlich, dass der Wandkern 138 gegenüber dem Wandmantel 140 mit einem Einsteckabschnitt 144 an einer Unterseite 146 der Betätigungswand 112 entlang der z-Achse hervorsteht. Der Einsteckabschnitt 144 dient zur leichten Montage der Betätigungswand 112 am Magazin 110 und ist in eine am Magazin 110, insbesondere am ersten Magazinblech 58, vorgesehene Einsteckaufnahme 148 einsteckbar. Der Einsteckabschnitt 144 und die Einsteckaufnahme 148 sind derart ausgebildet, dass die Betätigungswand 112 um 180° um die z-Achse gedreht ebenfalls in die Einsteckaufnahme 148 einsteckbar ist. Der Einsteckabschnitt 144 und die Einsteckaufnahme 148 sind vorzugsweise rechteckig ausgebildet. Nach dem Einstecken des Einsteckabschnitts 144 in die Einsteckaufnahme 148 steht der Einsteckabschnitt 144 gegenüber dem ersten Magazinblech 58 über, sodass die Betätigungswand 112 mittels mehrerer Schweißpunkte/-nähte 150 am Magazin 110 einfach und sicher fixierbar ist.

Gemäß Fig. 7c befindet sich der Adapter 108 in der Magazinposition, wobei die Magazinposition vorzugsweise durch Kontakt mit einem Magazinanschlag 42 im Magazin 110 erreicht wird. Dabei ist der Verriegelungsbolzen 30 gemäß Fig. 8a und 8b vollständig betätigt, sodass die Einführbolzen 26 aus der Aufnahme 28 entnehmbar sind und somit der Adapter 108 vom Wechselkopf 106 lösbar ist. In Fig. 11 ist gezeigt, wie die Handhabungseinrichtung 98 parallel zur y-Achse weg vom Magazin 110 gefahren wird, wobei der Adapter 108 im Magazin 110 verbleibt.

Ferner umfasst der Verriegelungsmechanismus gemäß Fig. 8a bis 10 wenigstens ein Anschlagmittel 122, insbesondere in der Form eines Gewindestifts 124, wobei sich das Anschlagmittel 122 vorzugsweise parallel zur y-Achse erstreckt. Das Anschlagmittel 122 ist mit dem Verriegelungsbolzen 30 im Adapter 18 gemäß der ersten Ausführungsform oder im Wechselkopf 106 gemäß der zweiten Ausführungsform angeordnet und dient zur Festlegung der Verriegelungslage und der Freigabelage des Verriegelungsbolzens 30. Dazu umfasst der Verriegelungsbolzen 30 am zweiten Abschnitt 52 entlang des Umfangs neben der Bolzenausnehmung 54 eine Anschlagsnut 126. Im montierten Zustand greift das Anschlagmittel 122 in die Anschlagsnut 126, wobei das Anschlagmittel 122 in der Verriegelungslage gemäß Fig. 9a mit einem inneren, ersten Nutende 128 und in der Freigabelage gemäß Fig. 8a mit einem äußeren, zweiten Nutende 130 in Eingriff steht.

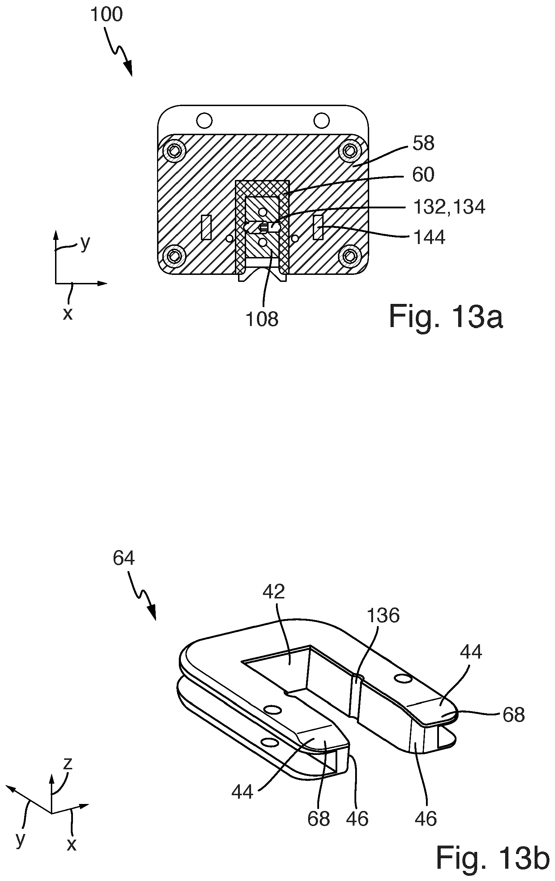

In Fig. 11 ist der Adapter 108 im Magazin 110 abgelegt. Zum Einführen und zum Halten des Adapters greift die Magazineinlage 60 mittels der Stege 44 in die zwei kulissenartige Führungsausnehmungen 50 am Adapter 108. Eine Halteeinrichtung 132, insbesondere in der Form eines Kugeldruckbolzens 134, ist gemäß Fig. 15a bis 15d im oder am Adapter 108 oder im oder am Magazin 110, insbesondere in oder an der Magazineinlage 60, vorgesehen, wobei diese insbesondere dann vorgesehen ist, wenn der Verriegelungsbolzen 30 im Wechselkopf 106 angeordnet ist. Die Halteeinrichtung 132 kann in der Führungsausnehmung 50, insbesondere im Nutboden 51, angeordnet sein. In diesem Fall fehlt es dem Adapter 108 an einer Fixierung im Magazin 110. Zur Fixierung des Adapters 108 im Magazin 110 greift die Halteinrichtung 132 gemäß Fig. 13a und 13b in eine Aussparung 136, welche am Magazin 110, insbesondere an der Magazineinlage 60, vorgesehen ist.

In Fig. 15d ist ein mehrteiliger Adapter 160 gezeigt, wobei dieser bei einem Backenwechselsystem 100 gemäß der zweiten Ausführungsform zum Einsatz kommt. Dabei weist der Adapter 160 einen ersten Adapterabschnitt 162 und einen zweiten Adapterabschnitt 164 auf. Der erste Adapterabschnitt 162 umfasst insbesondere die Führungsausnehmungen 50, die Einführbolzen 26 und die Halteeinrichtung 132. Der zweite Adapterabschnitt 164 bildet im Wesentlichen die Form des Greiffingers ab. Der erste Adapterabschnitt 162 und der zweite Adapterabschnitt 164 sind mittels Befestigungsmittel 166, insbesondere Schrauben oder Bolzen, miteinander verbunden. Demnach können bestehende Greiffinger ertüchtigt werden, um im Backenwechselsystem 100 eingesetzt zu werden. Eine Mehrteiligkeit ist ferner auch für den Wechselkopf 106 sowie für den Adapter 18 und den Wechselkopf 20 gemäß der ersten Ausführungsform denkbar.

## Patentansprüche

1. Wechselsystem (10, 100), insbesondere zum lösbaren Anordnen von Greifbacken (12) an Handhabungseinrichtungen (14, 98),
mit einem maschinenseitig angeordneten Wechselkopf (20, 106), mit einem am Wechselkopf (20, 106) befestigbaren Adapter (18, 108, 160) und mit einem Magazin (16, 110) zur Aufnahme des Adapters (18, 108, 160),
wobei der Adapter (18, 108, 160) senkrecht zur x-Achse entlang einer y-Achse in das Magazin (16, 110) in eine Magazinposition einführbar ist, **dadurch gekennzeichnet, dass** der Wechselkopf (20, 106) oder der Adapter (18, 108, 160) wenigstens einen Verriegelungsbolzen (30) aufweist, welcher entlang einer x-Achse zwischen einer inneren Freigabelage und einer äußeren Verriegelungslage verlagerbar ist,
dass der Wechselkopf (20, 106) in der Freigabelage von dem Adapter (18, 108, 160) lösbar ist und in der Verriegelungslage am Adapter (18, 108, 160) mittels des wenigstens einen Verriegelungsbolzens (30) verriegelbar ist,
dass der Wechselkopf (20, 106) oder der Adapter (18, 108, 160) wenigstens ein Federmittel (38) aufweist, welches den wenigstens einen Verriegelungsbolzen (30) in die Verriegelungslage drängt, und
dass der Verriegelungsbolzen (30) mittels wenigstens ein sich entlang der y-Achse erstreckenden Betätigungselements (44, 112) des Magazins (16, 110) in der Magazinposition kontaktierbar oder manuell betätigbar ist, um entgegen der Federkraft des Federmittels (36) aus der Verriegelungslage in die Freigabelage gedrängt zu werden.

2. Wechselsystem (10, 100) nach Anspruch 1, wobei der Wechselkopf (106) oder der Adapter (18) eine Aufnahme (28) und der Adapter (108, 160) oder der Wechselkopf (20) einen sich entlang einer senkrecht zur x-Achse und zur y-Achse verlaufenden z-Achse erstreckenden, in die Aufnahme (28) einführbaren Einführabschnitt (24) aufweist.

3. Wechselsystem (10, 100) nach Anspruch 2, wobei der Einführabschnitt (24) in der Freigabelage aus dem Wechselkopf (106) bzw. aus dem Adapter (18) entnehmbar ist und in der Verriegelungslage im Wechselkopf (106) bzw. im Adapter (18) mittels des wenigstens einen Verriegelungsbolzens (30) verriegelbar ist.

4. Wechselsystem (10, 100) nach Anspruch 2 oder 3, wobei der Einführabschnitt (24) wenigstens einen ersten Einführbolzen (26) und wenigstens einen zweiten Einführbolzen (26) aufweist, welche jeweils einen Klemmabschnitt (40) aufweisen, wobei in der Verriegelungslage entlang der y-Achse der wenigstens eine Verriegelungsbolzen (30) zwischen dem ersten Einführbolzen (26) und dem zweiten Einführbolzen (26) angeordnet ist.

5. Wechselsystem (10, 100) nach einem der Ansprüche 2 bis 4, wobei der wenigstens eine Verriegelungsbolzen (30) einen inneren ersten Abschnitt (32), einen mittleren zweiten Abschnitt (52) und einen äußeren dritten Abschnitt (56) aufweist,
wobei der erste Abschnitt (32) eine Federaufnahme (34) zur Aufnahme des Federmittels (36) und eine Verriegelungsschräge (38) zur Verriegelung des Einführabschnitts (24) aufweist,
wobei der zweite Abschnitt (52) eine Bolzenausnehmung (54) zur Freigabe des Einführabschnitts (24) aufweist, und
wobei der dritte Abschnitt (56) mit dem wenigstens einen Betätigungselement (44, 112) zusammenwirkt.

6. Wechselsystem (10, 100) nach einem der vorherigen Ansprüche, wobei das wenigstens eine Betätigungselement (44, 112) wenigstens eine Betätigungsschräge (48) zum gleichmäßigen Betätigen des Verriegelungsbolzen (30) aufweist.

7. Wechselsystem (10, 100) nach einem der vorherigen Ansprüche, wobei das Magazin (16, 110) ein erstes Magazinblech (58) und vorzugsweise ein zweites Magazinblech (64) aufweist, wobei vorzugsweise das erste Magazinblech (58) schwimmend, insbesondere mittels Elastomer-Aufnahmebuchsen (66), am zweiten Magazinblech (64) gelagert ist.

8. Wechselsystem (10, 100) nach Anspruch 7, wobei das Magazin (16, 110) wenigstens eine Magazineinlage (58) umfasst.

9. Wechselsystem (10) nach Anspruch 8, wobei die Magazineinlage (58) wenigstens einen Steg (44) umfasst, und wobei der wenigstens eine Steg (44) das wenigstens eine Betätigungselement (44) bildet.

10. Wechselsystem (100) nach Anspruch 7 oder 8, wobei das wenigstens eine Betätigungselement (112) als wenigstens eine gegenüber dem ersten Magazinblech (58) hervorstehende und im Wesentlichen parallel zur z-Achse erstreckende Betätigungswand (112) ausgebildet ist.

11. Wechselsystem (100) nach Anspruch 10, wobei die wenigstens eine Betätigungswand (112) parallel zur z-Achse in das erste Magazinblech einsteckbar ist.

12. Wechselsystem (100) nach Anspruch 10 oder 11,
wobei die wenigstens eine Betätigungswand (112) einen Wandkern (138) und einen Wandmantel (140) aufweist, wobei der Wandkern (138) ein Metall, insbesondere Blech, und der Wandmantel (140) einen Kunststoff umfasst.

13. Wechselsystem (10, 100) nach einem der Ansprüche 9 bis 12, wobei der Adapter (18, 108, 160) wenigstens eine kulissenartige Führungsausnehmung (50) aufweist, die so ausgebildet ist, dass beim Einführen des Adapters (18, 108, 160) in das Magazin (16, 110) der wenigstens eine Steg (44) in die wenigstens eine Führungsausnehmung (50) eingreift.

14. Wechselsystem (10, 100) nach einem der vorherigen Ansprüche, wobei das Magazin (16, 110) ein erstes Betätigungselement (44, 112a) und ein zweites Betätigungselement (44, 112b) aufweist, und wobei der Adapter (18, 108, 160) derart in das Magazin (16, 110) einführbar ist, dass entweder das erste Betätigungselement (44, 112a) oder das zweite Betätigungselement (44, 112b) mit dem Verriegelungsbolzen (30) zusammenwirkt.

15. Wechselsystem (10, 100) nach einem der vorherigen Ansprüche, wobei der Adapter (18, 108, 160) wenigstens eine Halteeinrichtung (132) zum Fixieren des Adapters (18, 108, 160) im Magazin (16, 110) aufweist, wobei vorzugsweise die wenigstens eine Halteeinrichtung (132) als wenigstens einer im Adapter (18, 108, 160) angeordneter Kugeldruckbolzen (134) ausgebildet ist.

16. Handhabungseinrichtung (14, 98) umfassend ein Greifergehäuse (102), wenigstens eine im Greifergehäuse (102) angeordnete Führungsbacke (104),
und ein Wechselsystem (10, 100) nach Anspruch 1, wobei der wenigstens eine Wechselkopf (20, 106) des Wechselsystems (10, 100) nach Anspruch 1 an der Führungsbacke (104) angeordnet ist.

## Claims

1. Interchangeable system (10, 100), in particular for the detachable arrangement of gripping jaws (12) on handling devices (14, 98),
comprising a machine-side interchangeable head (20, 106), comprising an adapter (18, 108, 160) that can be attached to the interchangeable head (20, 106) and comprising a magazine (16, 110) for receiving the adapter (18, 108, 160),
the adapter (18, 108, 160) being insertable perpendicularly to the x-axis along a y-axis into the magazine (16, 110) into a magazine position, **characterized**
**in that** the interchangeable head (20, 106) or the adapter (18, 108, 160) has at least one locking bolt (30) which is displaceable along an x-axis between an inner release position and an outer locking position,
**in that** the interchangeable head (20, 106) is detachable from the adapter (18, 108, 160) in the release position and can be locked to the adapter (18, 108, 160) in the locking position by means of the at least one locking bolt (30),
**in that** the interchangeable head (20, 106) or the adapter (18, 108, 160) has at least one spring means (38) which forces the at least one locking bolt (30) into the locking position, and
**in that** the locking bolt (30) in the magazine position can be contacted or manually actuated by means of at least one actuating element (44, 112) of the magazine (16, 110) extending along the y-axis, in order to be forced from the locking position into the release position against the spring force of the spring means (36).

2. Interchangeable system (10, 100) according to claim 1, wherein the interchangeable head (106) or the adapter (18) has a receptacle (28) and the adapter (108, 160) or the interchangeable head (20) has an insertion portion (24) which extends along a z-axis running perpendicularly to the x-axis and to the y-axis and which can be inserted into the receptacle (28).

3. Interchangeable system (10, 100) according to claim 2, wherein the insertion portion (24) is removable from the interchangeable head (106) or from the adapter (18) in the release position and can be locked in the interchangeable head (106) or in the adapter (18) by means of the at least one locking bolt (30) in the locking position.

4. Interchangeable system (10, 100) according to claim 2 or 3, wherein the insertion portion (24) has at least one first insertion bolt (26) and at least one second insertion bolt (26), each of which has a clamping portion (40), wherein in the locking position the at least one locking bolt (30) is arranged along the y-axis between the first insertion bolt (26) and the second insertion bolt (26).

5. Interchangeable system (10, 100) according to any of claims 2 to 4, wherein the at least one locking bolt (30) has an inner first portion (32), a middle second portion (52) and an outer third portion (56),
wherein the first portion (32) has a spring receptacle (34) for receiving the spring means (36) and a locking chamfer (38) for locking the insertion portion (24),
wherein the second portion (52) has a bolt recess (54) for releasing the insertion portion (24), and
wherein the third portion (56) interacts with the at least one actuating element (44, 112).

6. Interchangeable system (10, 100) according to any of the preceding claims, wherein the at least one actuating element (44, 112) has at least one actuating chamfer (48) for uniform actuation of the locking bolt (30).

7. Interchangeable system (10, 100) according to any of the preceding claims, wherein the magazine (16, 110) has a first magazine plate (58) and preferably a second magazine plate (64), wherein preferably the first magazine plate (58) is mounted floatingly on the second magazine plate (64), in particular by means of elastomer receiving bushings (66).

8. Interchangeable system (10, 100) according to claim 7, wherein the magazine (16, 110) comprises at least one magazine insert (58).

9. Interchangeable system (10) according to claim 8, wherein the magazine insert (58) comprises at least one projection (44), and wherein the at least one projection (44) forms the at least one actuating element (44).

10. Interchangeable system (100) according to claim 7 or 8, wherein the at least one actuating element (112) is designed as at least one actuating wall (112) projecting from the first magazine plate (58) and extending substantially parallel to the z-axis.

11. Interchangeable system (100) according to claim 10, wherein the at least one actuating wall (112) can be inserted into the first magazine plate parallel to the z-axis.

12. Interchangeable system (100) according to claim 10 or 11, wherein the at least one actuating wall (112) has a wall core (138) and a wall shell (140), wherein the wall core (138) comprises a metal, in particular sheet metal, and the wall shell (140) comprises a plastic.

13. Interchangeable system (10, 100) according to any of claims 9 to 12, wherein the adapter (18, 108, 160) has at least one slotted guide recess (50) which is designed such that when the adapter (18, 108, 160) is inserted into the magazine (16, 110) the at least one projection (44) engages in the at least one guide recess (50).

14. Interchangeable system (10, 100) according to any of the preceding claims, wherein the magazine (16, 110) has a first actuating element (44, 112a) and a second actuating element (44, 112b), and wherein the adapter (18, 108, 160) can be inserted into the magazine (16, 110) such that either the first actuating element (44, 112a) or the second actuating element (44, 112b) interacts with the locking bolt (30).

15. Interchangeable system (10, 100) according to any of the preceding claims, wherein the adapter (18, 108, 160) has at least one retaining device (132) for fixing the adapter (18, 108, 160) in the magazine (16, 110), wherein preferably the at least one retaining device (132) is designed as at least one ball-type pressure bolt (134) arranged in the adapter (18, 108, 160).

16. Handling device (14, 98) comprising a gripper housing (102), at least one guide jaw (104) arranged in the gripper housing (102),
and an interchangeable system (10, 100) according to claim 1, wherein the at least one interchangeable head (20, 106) of the interchangeable system (10, 100) according to claim 1 is arranged on the guide jaw (104).

## Revendications

1. Système d'échange (10, 100), en particulier pour la fixation amovible de mâchoires de préhension (12) sur des dispositifs de manutention (14, 98),
avec une tête interchangeable (20, 106) disposée du côté machine, avec un adaptateur (18, 108, 160) pouvant être fixé à la tête interchangeable (20, 106), et avec un magasin (16, 110) pour recevoir l'adaptateur (18, 108, 160),
où l'adaptateur (18, 108, 160) peut être introduit dans le magasin (16, 110) le long d'un axe y perpendiculaire à l'axe x, en une position de magasin, **caractérisé en ce que** la tête interchangeable (20, 106) ou l'adaptateur (18, 108, 160) comporte au moins une goupille de verrouillage (30) qui peut être déplacée le long d'un axe x entre une position de libération interne et une position de verrouillage externe, que la tête interchangeable (20, 106) est détachable de l'adaptateur (18, 108, 160) en position de libération et qu'en position de verrouillage elle peut être verrouillée sur l'adaptateur (18, 108, 160) au moyen d'au moins ladite goupille de verrouillage (30),
que la tête interchangeable (20, 106) ou l'adaptateur (18, 108, 160) comporte au moins un élément ressort (38) qui pousse ladite goupille de verrouillage (30) en position de verrouillage, et
que la goupille de verrouillage (30) peut être contactée ou actionnée manuellement au moyen d'au moins un élément d'actionnement (44, 112) du magasin (16, 110) s'étendant le long de l'axe y, lorsqu'elle est en position de magasin, afin d'être poussée de la position de verrouillage vers la position de libération contre la force de l'élément ressort (36).

2. Système d'échange (10, 100) selon la revendication 1, dans lequel la tête interchangeable (106) ou l'adaptateur (18) comporte une prise (28) et l'adaptateur (108, 160) ou la tête interchangeable (20) présente une section d'insertion (24) s'étendant le long d'un axe z perpendiculaire aux axes x et y et pouvant être introduite dans la prise (28).

3. Système d'échange (10, 100) selon la revendication 2, dans lequel la section d'insertion (24) est amovible depuis la tête interchangeable (106) ou depuis l'adaptateur (18) en position de libération et peut être verrouillée en position de verrouillage dans la tête interchangeable (106) ou dans l'adaptateur (18) au moyen d'au moins une goupille de verrouillage (30).

4. Système d'échange (10, 100) selon la revendication 2 ou 3, dans lequel la section d'insertion (24) comporte au moins une première goupille d'insertion (26) et au moins une seconde goupille d'insertion (26), chacune présentant une section de serrage (40), la goupille de verrouillage (30) étant disposée, en position de verrouillage le long de l'axe y, entre la première et la seconde goupille d'insertion (26).

5. Système d'échange (10, 100) selon l'une quelconque des revendications 2 à 4, dans lequel la ou les goupilles de verrouillage (30) comportent une première section interne (32), une deuxième section médiane (52) et une troisième section externe (56),
dans laquelle la première section (32) présente un logement pour ressort (34) destiné à recevoir l'élément ressort (36) et une rampe de verrouillage (38) pour verrouiller la section d'insertion (24),
dans lequel la deuxième section (52) présente un logement de goupille (54) pour la libération de la section d'insertion (24), et dans lequel la troisième section (56) coopère avec au moins un élément d'actionnement (44, 112).

6. Système d'échange (10, 100) selon l'une des revendications précédentes, dans lequel au moins un élément d'actionnement (44, 112) comporte au moins une rampe d'actionnement (48) permettant d'actionner uniformément la goupille de verrouillage (30).

7. Système d'échange (10, 100) selon l'une des revendications précédentes, dans lequel le magasin (16, 110) comporte une première tôle (58) et, de préférence, une deuxième tôle (64), la première tôle (58) étant de préférence montée de manière flottante, notamment au moyen de douilles de réception en élastomère (66), sur la deuxième tôle (64).

8. Système d'échange (10, 100) selon la revendication 7, dans lequel le magasin (16, 110) comprend au moins un insert du magasin (58).

9. Système d'échange (10) selon la revendication 8, dans lequel l'insert du magasin (58) comprend au moins une languette (44), ladite languette (44) constituant au moins un élément d'actionnement (44).

10. Système d'échange (100) selon la revendication 7 ou 8, dans lequel au moins un élément d'actionnement (112) est réalisé comme au moins une paroi d'actionnement (112) saillant par rapport à la première tôle du magasin (58) et s'étendant sensiblement parallèlement à l'axe z.

11. Système d'échange (100) selon la revendication 10, dans lequel ladite au moins une paroi d'actionnement (112) peut être insérée parallèlement à l'axe z dans la première tôle du magasin.

12. Système d'échange (100) selon la revendication 10 ou 11, dans lequel ladite au moins une paroi d'actionnement (112) comporte un noyau de paroi (138) et une gaine de paroi (140), le noyau de paroi (138) étant constitué d'un métal, notamment d'une tôle, et la gaine de paroi (140) comprenant un matériau plastique.

13. Système d'échange (10, 100) selon l'une des revendications 9 à 12, dans lequel l'adaptateur (18, 108, 160) comporte au moins une ouverture de guidage de type coulisse (50) conçue de sorte que, lors de l'introduction de l'adaptateur (18, 108, 160) dans le magasin (16, 110), ladite languette (44) s'engage dans ladite ouverture de guidage (50).

14. Système d'échange (10, 100) selon l'une des revendications précédentes, dans lequel le magasin (16, 110) comporte un premier élément d'actionnement (44, 112a) et un deuxième élément d'actionnement (44, 112b), et dans lequel l'adaptateur (18, 108, 160) peut être introduit dans le magasin (16, 110) de sorte que soit le premier élément d'actionnement (44, 112a), soit le deuxième élément d'actionnement (44, 112b) coopère avec la goupille de verrouillage (30).

15. Système d'échange (10, 100) selon l'une quelconque des revendications précédentes, dans lequel l'adaptateur (18, 108, 160) comporte au moins un dispositif de fixation (132) pour fixer l'adaptateur (18, 108, 160) dans le magasin (16, 110), ledit au moins un dispositif de fixation (132) étant de préférence constitué comme au moins une goupille de pression à billes (134) disposée dans l'adaptateur (18, 108, 160).

16. Dispositif de manutention (14, 98) comprenant un boîtier du préhenseur (102), au moins une mâchoire de guidage (104) disposée dans le boîtier du préhenseur (102), et un système d'échange (10, 100) selon la revendication 1, où au moins une tête interchangeable (20, 106) du système d'échange (10, 100) selon la revendication 1 est disposée sur la mâchoire de guidage (104).
